# DEMANDE DE BREVET EUROPEEN

(11) **EP 4 620 604 A1**
(43) Date de publication de la demande: **24.09.2025**
(21) Numéro de dépôt: 24164065.5
(22) Date de dépôt: 18.03.2024
(51) Int. Cl.: B23D 61/02

(54) **DISQUE DE DÉCOUPE**

(71) Demandeur: SGWM Wealth Management Sarl, 1971 Champlan (CH)
(72) Inventeur: Massy, Jean-Marc, 1994 Aproz (CH)
(74) Mandataire: P&TS SA (AG, Ltd.)

(57) **Abrégé**

La présente invention porte sur un disque de découpe (1) rotatif comprenant une butée circulaire (11) ayant un diamètre de butée (D11) concentrique au diamètre de coupe (D30) et inférieur au diamètre de coupe (D30), l'épaisseur de butée (E11) étant supérieure à l'épaisseur de coupe (E30) de sorte que la butée circulaire (11) limite la profondeur de coupe (PC) à une valeur prédéterminée. La présente invention porte en outre sur un kit comprenant plusieurs disques ayant des caractéristiques différentes et sur une méthode de découpe d'un matériau à l'aide de tels disques.

## Description

### Domaine technique

La présente invention concerne un disque de meulage ou de découpe pourvu d'une jauge de profondeur. La présente invention concerne en outre un lapidaire pourvu d'un tel disque de découpe ainsi qu'une méthode de découpe à l'aide d'un tel disque. En l'occurrence, le disque et la méthode de la présente invention permettent la découpe d'une épaisseur donnée de matériau de sorte à éviter d'endommager d'éventuels éléments sous-jacents.

### Etat de la technique

Les différents éléments techniques des infrastructures de communication, tels que des câbles électriques ou téléphoniques ou des fibres optiques, sont souvent insérés dans des tuyaux ou des tubes de protection. De tels tuyaux sont généralement en plastique, tel que du PVC ou d'autres matériaux plastiques, mais ils peuvent également se présenter sous la forme de ciment ou de métal ou de matériaux multicouches. Ils sont généralement rigides, ce qui n'exclut pas que des version plus souples peuvent être utilisées.

Les interventions de réparation ou de raccordement, ou le passage de nouveaux câbles, nécessitent de couper ces tubes de protection pour accéder à leur espace interne et/ou aux différents éléments techniques qu'ils abritent. Les tuyaux de protection doivent parfois être totalement sectionnés, ou bien être partiellement découpés pour établir une dérivation ou accéder à l'intérieur.

La découpe des tuyaux de protection s'effectue souvent à l'aide d'un lapidaire, également connu sous le terme de disqueuse ou tronçonneuse ou meuleuse, consistant en un appareil électroportatif entrainant en rotation un disque de découpe. Le disque de découpe, selon ses caractéristiques, permet ainsi de découper toute sorte de matériaux, incluant le ciment, le métal et les matériaux plastiques.

La difficulté d'une telle opération de découpe est de ne pas endommager les éléments techniques disposés à l'intérieur du tuyau, lesquels peuvent être au contact direct du tuyau. Une fois l'épaisseur du tuyau franchie par le disque, une découpe plus profonde peut aisément endommager des éléments sous-jacents. La dextérité de l'utilisateur peut ne pas suffire à éviter ce risque. Outre l'endommagement des éléments techniques, qui nécessitent après coup d'être remplacés ou réparés, des risques de blessure ou d'électrocution sont également présents, notamment quand des câbles électriques sont inclus dans les tuyaux.

Le document EP3501764 décrit une butée, servant de jauge de profondeur à un disque de découpe, permettant ainsi de limiter la profondeur de coupe. La butée, sous forme d'une bague, est combinée au disque et fixée avec lui à l'axe rotatif du lapidaire. Le jeu nécessaire à positionner la butée sur l'axe rotatif laisse subsister un risque de décentrage de la butée par rapport au disque. Il peut en résulter une erreur dans la profondeur de découpe, voire des soubresauts du disque au contact de la butée sur le tuyau, du fait de son décentrage. De plus, lors du contact de la butée sur le tuyaux, elle peut se décentrer, notamment si son serrage n'est pas suffisant, décalant ainsi la profondeur de coupe à une valeur plus grande que prévue, ce qui limite l'efficacité de la butée. En outre, l'utilisateur doit fixer la butée sur le lapidaire, en plus du disque et de la bague de serrage, et serrer l'ensemble des pièces tout en les maintenant en bonne position. Cette opération peut se révéler fastidieuse et imprécise.

Il convient donc de développer des solutions plus adéquates, plus fiables et/ou plus pratiques, pour découper des matériaux sur une profondeur prédéterminée.

### Bref résumé de l'invention

Un but de la présente invention est de proposer un disque de découpe exempt des limitations exposées ci-dessus. En l'occurrence, un but de la présente invention est de proposer un disque de découpe plus facile à installer sur un lapidaire. Un autre but de la présente invention est de proposer un disque de découpe permettant de limiter de manière plus fiable et plus sécurisée la profondeur de coupe. En particulier, un but de la présente invention est de pallier aux éventuels décalages ou décentrage de la butée.

Un autre but de l'invention est de proposer une solution flexible et adaptable à plusieurs matériaux et/ou plusieurs profondeurs de coupe.

Un autre but de la présente invention est de proposer une méthode de découpe d'une variété de matériaux, permettant de maitriser la profondeur de coupe de manière fiable, efficace et bon marché.

Selon l'invention, ces buts sont atteints notamment au moyen des éléments objet des revendications indépendantes et décrits plus en détails dans les revendications dépendantes.

En particulier, le disque de découpe selon l'invention désigne un disque rotatif. Il comporte un corps de disque formant un plan. Le plan du corps de disque correspondant au plan de rotation du disque. Le disque comporte un moyen de fixation permettant de fixer le disque sur un axe rotatif, pouvant également être désigné d'axe d'entrainement. Le moyen de fixation est disposé en position centrale du disque, notamment au centre du corps de disque, confondu avec l'axe de rotation du disque. Le moyen de fixation peut par exemple consister en un trou traversant le disque de sorte à l'insérer sur un axe rotatif orthogonal à son plan de rotation. Le disque comprend un bord de coupe permettant de pratiquer les découpes de matériau. Le bord de coupe peut avoir une épaisseur de coupe déterminée. En l'occurrence, l'épaisseur de coupe peut correspond à l'épaisseur du disque de découpe au niveau du bord de coupe. Le disque a un diamètre maximal correspondant au diamètre de coupe.

Le disque comporte une butée circulaire. La butée circulaire peut être disposée sur ou former une partie du corps de disque. L'épaisseur de la butée correspond à l'épaisseur du disque au niveau de la butée. Elle est supérieure à l'épaisseur de coupe de sorte à reposer sur la surface du matériau en découpe. Le diamètre de butée est concentrique au diamètre de coupe, c'est-à-dire ayant même axe de rotation, de préférence rigoureusement le même axe de rotation que le disque. Le diamètre de butée est inférieur au diamètre de coupe. Ainsi, l'espace séparant le diamètre de coupe et le diamètre de butée correspond à la profondeur de coupe. La profondeur de coupe à de la sorte une valeur fixe et constante sur toute la périphérie du disque. Elle est déterminée de manière fiable et reste fixe lors des opérations de découpe. La profondeur de coupe peut être par exemple comprise entre 1 mm et 20 mm. Alternativement ou en plus, la valeur du diamètre de butée peut correspondre à une valeur de 70% à 99% de la valeur du diamètre de coupe.

La butée est de préférence orientée orthogonalement au plan de rotation du disque. Elle forme de préférence une ou plusieurs surfaces lisses et continues pouvant venir au contact du matériau à découper lors de l'opération de découpe. La ou les surfaces de contact peuvent être séparées par une ou plusieurs rainures circulaires et parallèles. Cette disposition permet de limiter les frottements lors du contact de la butée sur le matériau en découpe. Elle permet en outre de faciliter l'évacuation d'éventuels copeaux ou débris de coupe.

La butée forme de préférence avec le bord de coupe une pièce unique. De préférence, la butée forme également avec le corps de disque une pièce unique. De préférence, le corps de disque, le bard de coupe et la butée circulaire forment ensemble une pièce unique monolitique.

L'épaisseur du corps de disque peut être égale à l'épaisseur de la butée sur toute la surface interne au diamètre de butée ou sur une partie de cette surface interne. Alternativement, l'épaisseur du corps de disque peut être inférieure à l'épaisseur de la butée sur toute la surface interne au diamètre de butée ou sur une partie de cette surface interne. Alternativement, l'épaisseur du corps de disque peut être supérieure à l'épaisseur de butée dans le périmètre défini par le diamètre de butée ou dans une partie de ce périmètre.

Le bord de coupe est adapté à la découpe de matériaux. Il peut être pourvu de plusieurs dents ayant un bord d'attaque, en position frontale, et une dépouille, en position arrière dans le sens de rotation du disque. Le bords d'attaque peut par exemple correspondre au diamètre de coupe. Les dépouilles peuvent s'inscrire dans un diamètre intermédiaire compris entre le diamètre de coupe et le diamètre de butée. Les dépouilles peuvent par exemple correspondre au diamètre de butée.

Le présent disque peut comprendre une bague de serrage, permettant de fixer le disque sur l'axe rotatif d'un lapidaire. La bague de serrage peut être pourvue d'un filetage, complémentaire du filetage de l'axe rotatif de sorte à fixer le disque. La bague de serrage peut en outre comporter des dispositifs de serrage, permettant notamment l'utilisation d'un outil de serrage tel qu'une clé de serrage. Par exemple, elle peut être pourvue d'évidements adaptés à l'insertion des ergots d'une clé serrage. Les évidements peuvent être disposés de part et d'autre du trou central de sorte à fixer le disque sur l'axe rotatif d'un lapidaire. La bague de serrage peut être intégralement constitutive du disque, de sorte à ne former avec lui qu'une seule pièce. Dans ce cas, la bague de serrage peut faire partie du moyen de fixation du disque. Alternativement, la bague de serrage est une pièce séparée. Dans ce cas, la bague de serrage ne fait pas partie du moyen de fixation du disque mentionné plus haut.

La présente invention couvre en outre un kit comprenant plusieurs disques de découpe dont les dimensions ou les caractéristiques diffèrent. Par exemple, les valeurs du diamètre de coupe, du diamètre de butée, de la profondeur de coupe, de l'épaisseur de coupe, de l'épaisseur de butée, peuvent varier d'un disque à l'autre. Alternativement ou en plus, la nature des dents et la forme des dents peuvent varier. Des disques peuvent être plus appropriés à la découpe de matériaux durs, d'autres à la découpe de polymères.

La présente invention couvre en outre une méthode adaptée à la découpe d'un tuyau sur une profondeur de découpe prédéterminée grâce à la butée ici-décrite. Un disque ayant la profondeur de coupe correspondant au maximum à l'épaisseur du matériau à découper est utilisé, mis en rotation par un lapidaire de sorte à découper le matériau, jusqu'au contact de la butée sur le matériau.

Cette solution présente notamment l'avantage par rapport à l'art antérieur de découper différents matériaux, en particulier des tubes ou des tuyaux, sur une profondeur prédéterminée, de manière fiable et reproductible. Les éléments techniques éventuellement présents dans les tuyaux ne sont ainsi pas endommagés.

### Brève description des figures

Des exemples de mise en oeuvre de l'invention sont indiqués dans la description illustrée par les figures ci-dessous :
- Figure 1 : représentation schématique faciale d'un disque selon un mode de réalisation de la présente invention,
- Figure 2. Représentation schématique transversale d'un disque selon un mode de réalisation de la présente invention,
- Figure 3 : Représentation schématique transversale d'un disque selon un autre mode de réalisation de la présente invention,
- Figure 4 : Représentation schématique transversale d'un disque selon un autre mode de réalisation de la présente invention,
- Figure 5 : Représentation schématique transversale d'un disque selon un autre mode de réalisation de la présente invention,

### Exemple(s) de mode de réalisation de l'invention

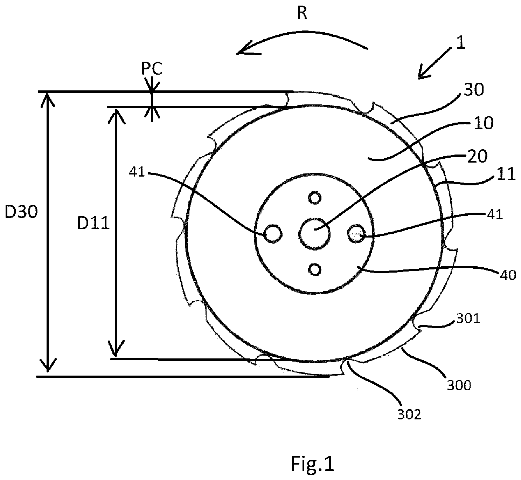

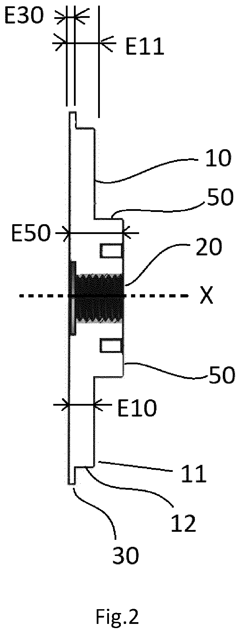

En référence à la figure **1****,** le disque **1** de la présente description comprend un corps de disque **10,** formant globalement un plan. Le disque **1** comporte également un moyen de fixation **20,** permettant de fixer le disque **1** sur un axe rotatif de lapidaire (non représenté). Le moyen de fixation **20** peut comporter ou consister en un trou traversant le disque **1** et disposé au centre du disque, selon son axe de rotation. Le trou central est suffisamment large pour s'adapter au diamètre de l'axe rotatif du lapidaire. Le trou traversant peut être éventuellement cerné d'une entretoise circulaire métallique, notamment si le disque n'est pas constitué de métal. Le disque de découpe **1** selon la présente invention comporte un bord de coupe **30** disposé en périphérie ou formant sa périphérie (figures 2 à 5). Le bord de coupe 30 représente la partie du disque impliquée dans la découpe des matériaux. Le bord de coupe **30** présente une épaisseur de coupe **E30** correspondant à l'épaisseur du disque au niveau du bord de coupe **30.** En d'autres termes, l'épaisseur de coupe **E30** correspond également à la largeur de l'entaille produite dans le matériaux lors de sa découpe. Les épaisseurs de coupe sont variables en fonction de la nature du disque. Typiquement, elles sont comprises entre 1 mm et 5 mm, des épaisseurs de coupe de l'ordre 1,2, 1,4, 1,6, 2, 2,5 mm sont relativement usuelles. L'épaisseur de coupe du disque selon la présente invention n'est cependant pas limitée à ces valeurs.

Le bord de coupe **30** présente en outre un diamètre de coupe **D30.** En principe, les aspects tranchants du bord de coupe se trouvent à la position la plus périphérique du disque. Le diamètre de coupe **D30** correspond ainsi au diamètre maximal du disque de découpe **1.** Le diamètre de coupe **D30** peut varier d'un disque à l'autre. Des diamètres usuels sont par exemple de 115 mm, 152 mm, 180 mm, 230 mm, 300 mm ou 350 mm. Le diamètre des disques selon la présente description ne se limite cependant pas à ces valeurs.

Le corps de disque **10** comprend la surface entre le moyen de fixation 20 central et le bord de coupe **30.** Selon un mode de réalisation, le moyen de fixation **20** est également compris dans le corps de disque **10.** Le corps de disque **10** forme de préférence une surface pleine, c'est-à-dire non ajourée, à l'exception du trou central faisant office de moyen de fixation 20.

Le disque peut être constitué de toute matière adéquate telle que des fibres abrasives, un métal, un alliage métallique ou un mélange de ces matériaux. De préférence le disque selon la présente invention est constitué de ou comprend un métal, tel que de l'acier, de l'inox, de l'aluminium, ou des alliages métalliques.

Selon un mode de réalisation le disque selon la présente invention comporte des dents de découpe **300,** adaptées aux matériaux à tronçonner. Les dents de découpe **300** sont de préférence également faites en métal. Elles peuvent en outre être recouvertes ou comporter un alliage résistant propre à la découpe de matériaux durs tels que le ciment ou la pierre. Le disque peut alternativement ou en plus être diamanté. La forme des dents **300** n'est en outre pas limitée. Elles peuvent être symétriques, par exemple adaptées aux deux sens de rotation du disque. Alternativement, les dents **300** peuvent avoir une forme asymétrique, ce qui implique d'orienter le disque convenablement dans le sens de rotation **R** (figure 1). De telles dents asymétriques comportent alors un bord d'attaque **301** orienté vers l'avent des dents **300 dans** le sens de rotation **R** et une dépouille **302** disposée vers l'arrière de la dent **300.** Le bord d'attaque et la dépouille peuvent être joints par une ligne de coupe, laquelle peut correspondre au diamètre de coupe **D30** ou bien former un diamètre décroissant depuis le bord d'attaque **301** vers la dépouille **302.** L'exemple de dents décrit ici n'est cependant pas limitatif.

Le disque de découpe **1** selon la présente invention comporte une butée circulaire **11.** De préférence, la butée circulaire **11** est partie intégrante du corps de disque **10.** Les figures 2, 3, 4 et 5 montrent différents modes de réalisation d'une telle butée circulaire **11.** La butée circulaire **11** présente un diamètre de butée **D11** concentrique au diamètre de coupe **D30.** Le fait que la butée circulaire **11** soit intégrée au disque de découpe **1** garantit sa position fixe par rapport au bord de coupe **30.** En l'occurrence, la butée circulaire **11** n'a pas de possibilité de se déplacer par rapport au bord de coupe **30,** ce qui interdit toute excentricité ou défaut d'alignement, y compris lors des opérations de découpe difficiles. Cette disposition exclut l'ajout d'une entretoise ou de toute pièce additionnelle faisant office de butée, ce qui facilite l'installation du disque sur un lapidaire.

La butée circulaire **11** présente une épaisseur de butée **E11** correspondant à l'épaisseur du disque au niveau de la butée circulaire **11.** l'épaisseur de butée **E11** est supérieure à l'épaisseur de coupe **E30** de sorte à permettre l'appui de la butée circulaire **11** sur le matériaux en découpe lorsque le bord de coupe **30** s'enfonce dans l'épaisseur du matériau. Le diamètre de butée **D11** doit être inférieur au diamètre de coupe **D30** pour ce faire. Ainsi, la butée circulaire **11** limite la profondeur de coupe **PC** (figure 1) à une valeur prédéterminée. En l'occurrence, la profondeur de coupe PC est limitée à l'espace compris entre la butée circulaire **11** et le bord de coupe 30. Selon un mode de réalisation, la profondeur de coupe PC est déterminée pour correspondre aux épaisseurs standards des tuyaux usuels. Par exemple les tuyaux en PVC utilisés comme gaine technique peuvent avoir des épaisseurs connues standard de 2,4 mm ou 3,7 mm ou d'autres valeurs. La profondeur de coupe **PC** peut ainsi être adaptée aux tuyaux à découper. Selon un mode de réalisation, la profondeur de coupe PC et/ou une référence à des tuyaux standards peut être inscrite sur le disque, de sorte que l'utilisateur puisse choisir un disque adapté à l'épaisseur du matériau à découper.

La profondeur de coupe PC est ainsi fixe et non modifiable. Elle reste en outre constante lors des opérations de découpe et ne dépend pas de la manière dont le disque de découpe **1** est installé sur un lapidaire. Le fait que la butée circulaire **11** soit intégrée au disque facilite en outre l'installation du disque sur le lapidaire. Dans ces conditions, l'utilisateur n'a pas à ajuster la position relative de la butée circulaire et du bord de coupe.

Les figures 2, 4 et 5 illustrent des modes de réalisation selon lesquels la butée circulaire **11** est disposée sur une seule face du disque **1.** Cela signifie qu'elle ne vient au contact du matériau en découpe que sur l'un des bords de l'entaille faite dans le matériau par le bord de coupe **30.** Cette disposition implique de disposer de préférence la butée circulaire **11** sur la face visible du disque de découpe **1** lorsqu'il est monté sur un lapidaire. La face visible se comprend ici comme étant celle la plus exposée, visible de l'utilisateur lorsqu'il découpe un matériau, opposée à celle jouxtant le carter de protection du lapidaire. Cette disposition est plus préférablement considérée lorsque le disque de découpe **1** comporte des dents 300 asymétriques et qu'il a par conséquent un sens de rotation R dédié à la découpe de matériaux. Lorsque les dents 300 sont symétriques et adaptées aux deux sens de rotations du disque, la butée circulaire **11** peut être disposée plus librement sur l'une ou l'autre des faces du disque **1.** L'utilisateur pourra aisément installer le disque de découpe **1** sur la lapidaire de sorte à laisser visible la butée circulaire **11.**

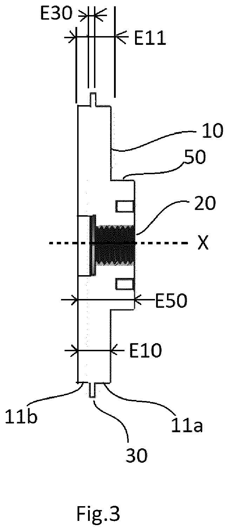

La figure 3 montre un mode de réalisation alternatif selon lequel la butée circulaire **11** s'étend de part et d'autre du bord de coupe 30. En particulier deux demies butées **11a, 11b** peuvent être disposées sur les deux faces du disque **1** en vis-à-vis. De la sorte, l'orientation du disque selon le sens de rotation R importe peu. En outre, la résistance sur le matériau en découpe reste équilibrée, les deux demies butées **11a, 11b** reposant de part et d'autre de l'entaille faite dans le matériau par le bord de coupe **30.** Une telle disposition évite par exemple toute inclinaison du disque lors d'une opération de découpe, qui résulterait du contact de la butée circulaire **11** avec le matériau en découpe sur seulement l'une des faces du disque 1. Les deux demis butées **11a, 11b** peuvent avoir la même épaisseur. Alternativement, l'une des deux demies-butées **11a, 11b** peut être plus épaisse que l'autre, formant ainsi une butée principale et une butée secondaire. Dans ce cas, la demie-butée secondaire, la moins épaisse, permet de stabiliser l'inclinaison du disque lorsque la demie butée principale vient en contact avec le matériau en découpe.

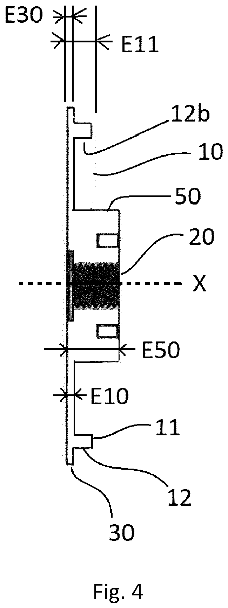

Le corps du disque **10** peut avoir une épaisseur de corps **E10** variable ou homogène dans le périmètre du diamètre de butée **D11.** L'épaisseur de corps **E10** peut par exemple correspondre à l'épaisseur de butée sur toute la surface délimitée par le diamètre de butée **D11.** Alternativement, un moyeu central **50** peut être prévu autour du moyen de fixation **20** du disque. Un tel moyen central peut avoir une épaisseur de moyeu **E50** égale ou supérieure à l'épaisseur de corps **E10.** La figure 2 montre une configuration dans laquelle l'épaisseur de corps **E10** correspond à l'épaisseur de butée **E11** dans le périmètre du diamètre de butée **D11,** où le corps de disque **10** comporte en outre un moyeu central **50** d'épaisseur de moyeu **E50** supérieure à l'épaisseur de corps **E10.** Une telle configuration autorise une épaisseur du disque plus importante au niveau de son moyen de fixation **20,** assurant ainsi une fixation plus robuste sur l'axe rotatif du lapidaire. Le poids du disque et la quantité de matière nécessaire à sa fabrication restent en contrepartie limités, du fait de l'épaisseur de corps **E10** relativement plus faible que l'épaisseur de moyeu **E50.** D'autres configurations relatives aux différentes épaisseurs du disque peuvent être prévues. La figure 4 montre un mode de réalisation selon lequel l'épaisseur de corps **E10** est inférieure à l'épaisseur de butée **E11.** Dans ce cas également, le disque comporte un moyeu central 50 d'épaisseur de moyeu **E50** supérieure à l'épaisseur de corps **E10.** L'épaisseur de moyeu central **E50** peut en outre surpasser l'épaisseur de butée **E11.** Alternativement, l'épaisseur de moyeu **E50** peut être comprise entre l'épaisseur de butée **E11** et l'épaisseur de corps **E10.**

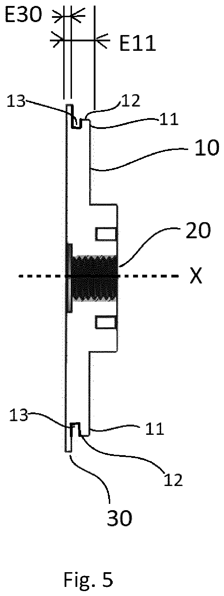

Selon un mode de réalisation, visible par exemple à la figure 1, la butée circulaire **11** offre une surface de contact **12** pleine orientée vers le bord de coupe **30.** Dans ce cas la surface de contact **12** comble la différence d'épaisseur entre l'épaisseur de coupe **E30** et l'épaisseur de butée **E11.** Dans un mode de réalisation mieux représenté à la figure 5, la butée **11** offre une surface de contact tronquée **12,** c'est-à-dire d'épaisseur inférieure à la différence d'épaisseur de coupe E30 et de butée **E11.** Une rainure circulaire **13** s'inscrit dans la butée en complément de la surface de contact **12.** Une telle rainure permet par exemple de laisser plus de chant au bord de coupe **30** et facilite l'évacuation de copeaux ou de débris de coupe. Alternativement ou en plus, la rainure permet de limiter la surface de contact avec le matériau en découpe, limitant ainsi les éventuelles frictions et surchauffes lors de la rotation du disque. La butée **11** reste néanmoins suffisamment épaisse pour s'appuyer sur le matériau en découpe de manière efficace. Bien qu'une rainure **13** soit ici représentée, cela n'interdit pas de disposer plusieurs rainures circulaires parallèles. En outre, bien que la rainure soit ici représentée avec un profil angulaire, cela n'interdit pas d'autres profils de rainures, telles que arrondis, ou biseautés.

Dans tous les cas, la surface de contact **12** de la butée reste orthogonale au plan du disque.

La figure 4 représente un mode de réalisation selon lequel l'épaisseur de corps **E10** est inférieure à l'épaisseur de butée **E11** dans le périmètre du diamètre de butée **D11.** Dans ce cas, la butée 11 présente une surface arrière **12b,** opposée à la surface de contact **12** et orientée vers le centre du disque de découpe **1.** La surface arrière peut être parallèle à la surface de contact **12,** c'est-à-dire orthogonale au plan de coupe du disque. La présente invention ne se limite cependant pas à cette disposition. La butée peut par exemple être plus large à sa base, au niveau du corps de disque 10, avec une surface arrière **12b** oblique. La butée circulaire **11** ayant un tel profil se trouve ainsi renforcée à sa base et peut ainsi être plus fine à son extrémité sans perte de robustesse.

Indépendamment du profil de la butée circulaire **11,** la surface de contact **12** peut être traitée de sorte à renforcer sa dureté, ou bien revêtue d'un matériau antifriction.

Le présent disque de découpe peut être combiné à une bague de serrage **40.** La bague de serrage peut par exemple être pourvue d'un trou central fileté adapté à être vissé sur l'axe rotatif d'un lapidaire, lui-même fileté. La bague de serrage **40** peut en outre comporte deux ou plusieurs pairs d'évidements **41** disposés de part et d'autre du trou central et adaptés à l'insertion d'un outil de serrage tel qu'une clé à ergots ou tout équivalent. La bague de serrage **40** peut être apposée sur le corps de disque **10** et vissée sur l'axe rotatif du lapidaire de sorte à y fixer le disque de découpe.

Selon un mode de réalisation, la bague de serrage **40** coïncide avec le moyeu central **50** et vient en surépaisseur du moyeu central **50.** Il peut être prévu que l'épaisseur de moyeu E50 soit inférieure à l'épaisseur du corps **E10** de sorte que la bague s'insère dans l'épaisseur de corps au moins partiellement. De la sorte, la bague de serrage 40 et le disque sont callés l'un par rapport à l'autre, ce qui évite toute excentricité de la bague par rapport à l'axe de rotation X du disque de découpe **1.**

Selon un autre mode de réalisation, la bague de serrage 40 forme avec le disque une pièce unique. Elle peut par exemple constituer le moyeu central 50 du disque de découpe 1. Dans ce cas, le trou central de la bague de serrage correspond au trou central du disque mentionné plus haut. Un filetage peut être prévu sur toute l'épaisseur de moyeu E50 de sorte que le disque lui-même soit vissé sur l'axe rotatif d'un lapidaire. Une telle disposition facilite d'autant la mise en place du disque sur un lapidaire car une seule pièce est manipulée.

Les différents modes de réalisation décrits ci-dessous ne sont pas mutuellement exclusifs. Leurs différentes caractéristiques peuvent être combinées, mélangées, associées pour autant qu'elles restent techniquement viables. Par exemple, une ou plusieurs rainures circulaires **13** peuvent être prévues indépendamment de l'épaisseur du corps **E10** ou de la présence ou de l'absence d'un moyen central **50** ou de la disposition en demie-butées icidécrites.

Le coût de fabrication du disque selon la présente description est de préférence maintenu au plus bas. Pour ce faire, le profil du disque peut être maintenu le plus simple possible pour en limiter les éventuelles opérations d'usinage. Ainsi, l'épaisseur de corps **E10** peut être maintenue constante dans le périmètre du diamètre de butée, par exemple égale à l'épaisseur de **butée E11.**

La présente invention couvre en outre un kit comprenant plusieurs disques tels décrits ici, dont certaines caractéristiques varient. Par exemple un kit comprenant deux ou plus de deux disques adaptés chacun à des matériaux différents mais ayant la même profondeur de coupe peut être prévu. Des profils de dents **300** différents peuvent être prévus à cet effet. Le kit peut comprendre alternativement ou en plus des disques ayant une profondeur de coupe **PC** distincte. De préférence, les profondeurs de coupe ou les types de tuyaux pour lesquels les disques sont conçus sont notés sur le disque. Alternativement ou en plus, des profils de disques différents peuvent être présents, notamment pour ce qui concerne les épaisseurs de corps **E10,** de butée **E11,** de moyeu **E50** le cas échéant. Alternativement ou en plus, des disques ayant des diamètres de coupe **D30** différents ou bien des diamètres de butée **D11** différents, peuvent être prévus. Le kit peut en outre comporter une bague de serrage **40** telle que décrite ici, avec une clé de serrage adaptée. Alternativement, le kit selon la présente description ne comporte que des disques dans lesquels la bague de serrage est totalement intégrée. Dans ce cas, seule la clé de serrage adéquate peut être incluse dans le kit. Le kit selon la présente invention permet notamment d'initier une découpe d'un matériaux sans en connaître son épaisseur, à l'aide d'un disque de profondeur de coupe PC minimale. Dans le cas où la profondeur de coupe minimale ne suffit pas à découper le tuyau, un second disque ayant une profondeur de coupe immédiatement supérieure peut être utilisé. Les différentes profondeurs de coupe des différents disques du kit sont de préférence adaptées aux épaisseurs standards usuelles des tuyaux. Plusieurs changements de disques peuvent être requis avant de découper totalement le tuyau sans abimer les éléments qu'ils contient. Il convient ainsi que les disques soient aisément remplacés, notamment grâce au vissage rapide d'une seule pièce plutôt que de plusieurs accessoires sur l'axe rotatif du lapidaire.

La présente invention couvre également une méthode de découpe d'un matériau d'épaisseur connue ou inconnue, de sorte à ne pas endommager les éléments éventuellement sous-jacents au matériau. Le matériau à découper est de préférence un tube ou un tuyau, constitué d'un matériau rigide ou souple. La méthode selon la présente invention comporte l'étape de sélectionner un disque de profondeur de coupe adaptée à l'épaisseur du matériau à découper, ou bien de profondeur de coupe minimale si l'épaisseur du matériau est inconnue. Le disque sélectionné est ensuite monté sur un lapidaire puis actionné de sorte à initier la découpe du matériau. La méthode comprend l'étape de découper le matériau à l'aide du disque sélectionné jusqu'au contact de la butée 11 sur la surface du matériau. Si la profondeur de coupe PF est jugée suffisante, alors l'opération de découpe est poursuivie jusqu'à obtenir la découpe prévue. Dans le cas contraire, le disque initialement sélectionné est remplacé par un disque ayant une profondeur de coupe PC supérieure à celle du disque précédent. L'opération peut être réitérée plusieurs fois jusqu'à atteindre la profondeur de coupe désirée.

### Numéros de référence employés sur les figures

- 1: Disque de découpe
- 10: Corps de disque
- 11: Butée circulaire
- 11a, 11b: Demies-butées
- 12: Surface de butée
- 13: Rainure circulaire
- 20: Moyen de fixation
- 30: Bord de coupe
- 300: Dents
- 301: Bord d'attaque
- 302: Dépouille
- 40: Bague
- 41: Evidements
- 50: Moyeu central
- R: Sens de rotation
- D11: Diamètre de butée
- E11: Epaisseur de butée
- D30: Diamètre de coupe
- E30: Epaisseur de coupe
- E50: Epaisseur de moyeu
- PC: Profondeur de coupe
- X: Axe de rotation

## Revendications

1. Disque de découpe (1) rotatif comprenant un corps de disque (10) disposé dans un plan de rotation, un moyen de fixation (20) disposé au centre du corps de disque (10) et un bord de coupe (30) disposé en périphérie du corps de disque, le bord de coupe ayant une épaisseur de coupe (E30), correspondant à l'épaisseur du disque de découpe au niveau du bord de coupe (30) et un diamètre de coupe (D30) correspondant au diamètre maximal du disque, le corps de disque (10) ayant une épaisseur de corps (E10),
**caractérisé en ce que** le corps de disque (10) comporte une butée circulaire (11) ayant une épaisseur de butée (E11) correspondant à l'épaisseur du disque au niveau de la butée circulaire, et un diamètre de butée (D11) concentrique au diamètre de coupe (D30), l'épaisseur de butée (E11) étant supérieure à l'épaisseur de coupe (E30) et le diamètre de butée (D11) étant inférieur au diamètre de coupe (D30), de sorte que ladite butée circulaire (11) limite la profondeur de coupe (PC) à une valeur prédéterminée correspondant à l'espace entre ladite butée circulaire (11) et le bord de coupe (30).

2. Disque de découpe selon la revendication 1, ladite butée circulaire (11) comprenant une surface de contact (12) orientée orthogonalement au plan de rotation du disque (1), ladite surface de contact étant substantiellement lisse et continue.

3. Disque de découpe selon l'une des revendications 1 et 2, ladite profondeur de coupe (PC) étant comprise entre 1 mm et 50 mm et/ou la valeur du diamètre de butée (D11) étant comprise entre 70% et 99% de la valeur du diamètre de coupe (D30).

4. Disque de découpe selon l'une des revendications 1 à 3, ladite butée circulaire formant une surface lisse et continue (12).

5. Disque de découpe selon l'une des revendications 1 à 4, ladite butée circulaire formant avec le bord de coupe (30) et avec le corps de disque (10) une pièce unique.

6. Disque de découpe selon l'une des revendications 1 à 5, ladite butée circulaire (11) comprenant une ou plusieurs rainures circulaires (13) sur la surface de contact (12).

7. Disque de découpe selon l'une des revendications 1 à 6, l'épaisseur du corps de disque étant égale, inférieure ou supérieure à l'épaisseur de butée (E11) dans le périmètre défini par le diamètre de butée (D11).

8. Disque de découpe selon l'une des revendications 1 à 7, comprenant en outre un moyeu central (50) d'épaisseur de moyeu (E50), ledit moyeu central entourant le moyen de fixation (20), ladite épaisseur de moyeu étant supérieure à l'une ou l'autre des épaisseurs de corps (E10) et de butée (E11).

9. Disque de découpe selon l'une des revendications 1 à 7, ledit bord de coupe (30) étant pourvu de plusieurs dents (300) pourvues chacune d'un bord d'attaque (301) orienté dans le sens de rotation (R) du disque, et d'une dépouille (302) en position arrière des dents, où les bords d'attaque (301) s'inscrivent dans le diamètre de coupe (D30) et où les dépouilles s'inscrivent dans un diamètre compris entre le diamètre de coupe (D30) et le diamètre de butée (D11) ou correspondent au diamètre de butée (D11).

10. Disque de découpe selon l'une des revendications 1 à 8, ledit moyen de fixation (20) comprenant un trou traversant le corps du disque (10) de sorte à l'insérer sur un axe rotatif orthogonal au plan de rotation du disque.

11. Disque de découpe selon l'une des revendications 1 à 9, comprenant en outre une bague de serrage (40) comprenant un trou central et au moins deux évidements (41) adaptés à l'insertion d'ergots de serrage, disposé de part et d'autre du trou central de sorte à fixer le disque sur un axe rotatif.

12. Disque selon la revendication 10, ladite bague de serrage (40) formant avec le corps du disque (10) une pièce unique, son trou central étant fileté et coaxial au trou traversant le corps du disque.

13. Kit de découpe comprenant au moins deux disques de découpe selon l'une des revendications 1 à 11, lesdits disques différant l'un de l'autre de par une ou plusieurs des valeurs sélectionnées parmi le diamètre de coupe (D30), le diamètre de butée (D11), la profondeur de coupe (PC), l'épaisseur de coupe (E30), l'épaisseur de butée (E11), la nature des dents et la forme des dents.

14. Méthode de découpe d'un tuyau ayant une épaisseur de tuyau (ET) au moyen d'un disque de découpe selon l'une des revendications 1 à 11, ladite méthode comprenant les étapes de :
- a) sélectionner un disque de découpe dont la profondeur de coupe (PC) est inférieure ou égale à l'épaisseur de tuyau (ET) ou correspondant à une valeur comprise entre 80% et 100% de l'épaisseur de tuyau,
- b) fixer le disque de découpe sur l'axe rotatif d'un lapidaire par son moyen de fixation (20),
- c) entraîner en rotation le disque de découpe dans le sens de rotation (R) adapté à la découpe dudit tuyau,
- d) initier la découpe du tuyau en mettant le bord de coupe en contact avec ledit tuyau, et
- e) poursuivre la découpe périphérique du tuyau jusqu'à ce que la butée circulaire (11) entre en contact avec le tuyau.

15. Méthode selon la revendication 13 dans laquelle les étapes a) à e) sont réitérées avec un disque de plus grande profondeur de coupe dans le cas où la profondeur de coupe du disque initial ne suffit pas à découper le matériau.
